# EUROPÄISCHE PATENTSCHRIFT

(11) **EP 1 319 312 B1**
(45) Veröffentlichungstag und Bekanntmachung des Hinweises auf die Patenterteilung: **21.04.2004**
(21) Anmeldenummer: 01974042.2
(22) Anmeldetag: 14.09.2001
(51) Int. Cl.: H04Q 3/00, H04Q 3/545

(54) **VERFAHREN ZUR STEUERUNG VON ANSAGEN UND DIALOGEN IN PAKETNETZEN**
METHOD FOR CONTROLLING RECORDED ANNOUNCEMENTS AND INTERACTIVE VOICE RESPONSES IN PACKET NETWORKS
PROCEDE DE COMMANDE D'ANNONCES ET DE DIALOGUES DANS DES RESEAUX DE PAQUETS

(30) Priorität: 22.09.2000 DE 10047129
(43) Veröffentlichungstag der Anmeldung: 18.06.2003
(73) Patentinhaber: Siemens Aktiengesellschaft, 80333 München (DE)
(72) Erfinder: FRANZ, Mathias, 10178 Berlin (DE); JUGEL, Alfred, 82538 Geretsried (DE); PULVERER, Klaus, 81369 München (DE); LÖBIG, Norbert, 64291 Darmstadt (DE); KLEINER, Patrick, 81476 München (DE)
(86) Internationale Anmeldenummer: PCT/DE2001/003544
(87) Internationale Veröffentlichungsnummer: WO 2002/025958

(56) Entgegenhaltungen:
- EP-A- 0 282 187
- WO-A-99/29095
- US-A- 6 014 437

## Beschreibung

Die Erfindung betrifft ein Verfahren gemäß dem Oberbegriff von Patentanspruch 1.

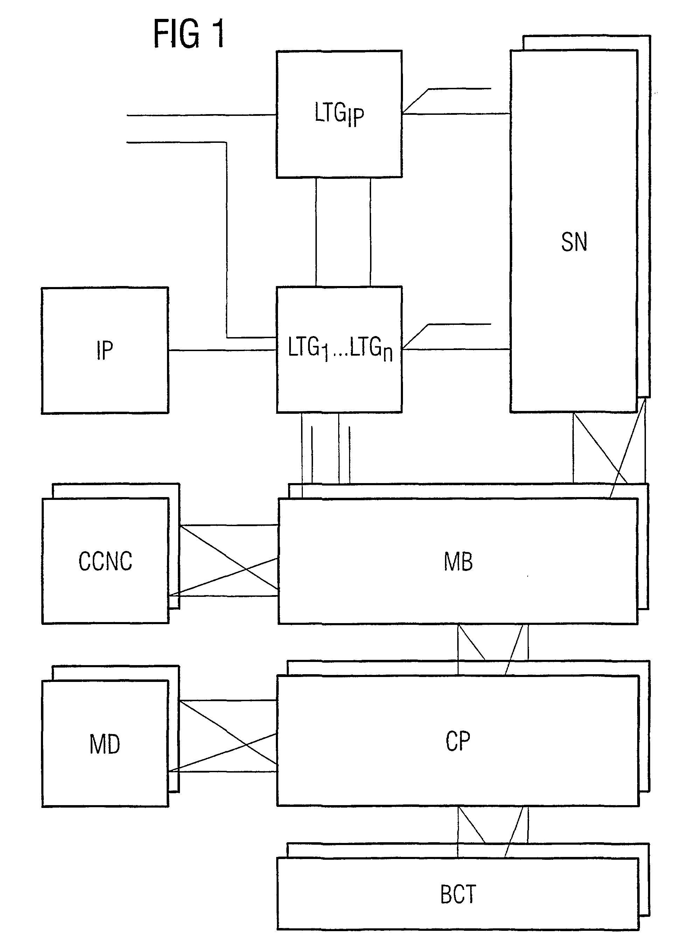

Ein Vermittlungsknoten weist beim Stand der Technik periphere Einrichtungen (Anschlußeinrichtungen für Teilnehmer oder Leitungen), eine zentrale Rechnerplattform, eine Nachrichtenverteileinrichtung und weitere, zentrale Einheiten (Koppelfeld, Protokollabschlußeinrichtungen (z. B. #7), Hintergrundspeicher, Bedieneinrichtungen) auf. Die entsprechenden Verhältnisse sind in Fig. 1 wiedergegeben.

Aus Gründen der Ausfallsicherheit sind die zentralen Komponenten eines Vermittlungssystems redundant (z.B. gedoppelt) ausgelegt, während die peripheren Einrichtungen in der Regel nicht redundant ausgebildet sind. Im Falle von verschärften Ausfallanforderungen (z. B. Retten stabiler Verbindungen über den Ausfall einer peripheren Einrichtung hinaus) können letztere jedoch Redundanz aufweisen.

Werden Signalisierung und Sprache disassoziiert auf getrennten Wegen geführt und haben die peripheren Einrichtungen nur noch die Aufgabe der Protokollverarbeitung und/oder -konversion ohne physikalische Terminierung der Sprachkanäle,so entfallen die Beschränkungen der peripheren Einrichtungen hinsichtlich Ressourcen-Pool und Anzahl terminierbarer Sprachkanäle. Die periphere Einrichtung wird für diesen Anwendungsfall hinsichtlich ihrer Kapazität sowohl durch die Leistungsfähigkeit der Prozessoren als auch durch die Größe des Speichers und die Kapazität der Nachrichtenschnittstelle bestimmt.

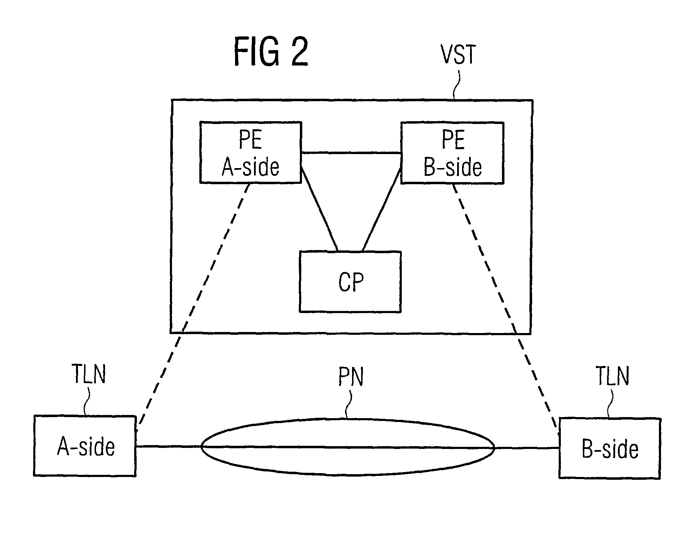

Da für die Durchschaltung der Sprache zwischen dem A-Teilnehmer und einem beliebigen B-Teilnehmer mehr als eine Richtung zur Verfügung gestellt werden muß, sind in der Regel stets zwei verschiedene periphere Einrichtungen PE am Verbindungsauf- und -abbau beteiligt (Fig. 2).

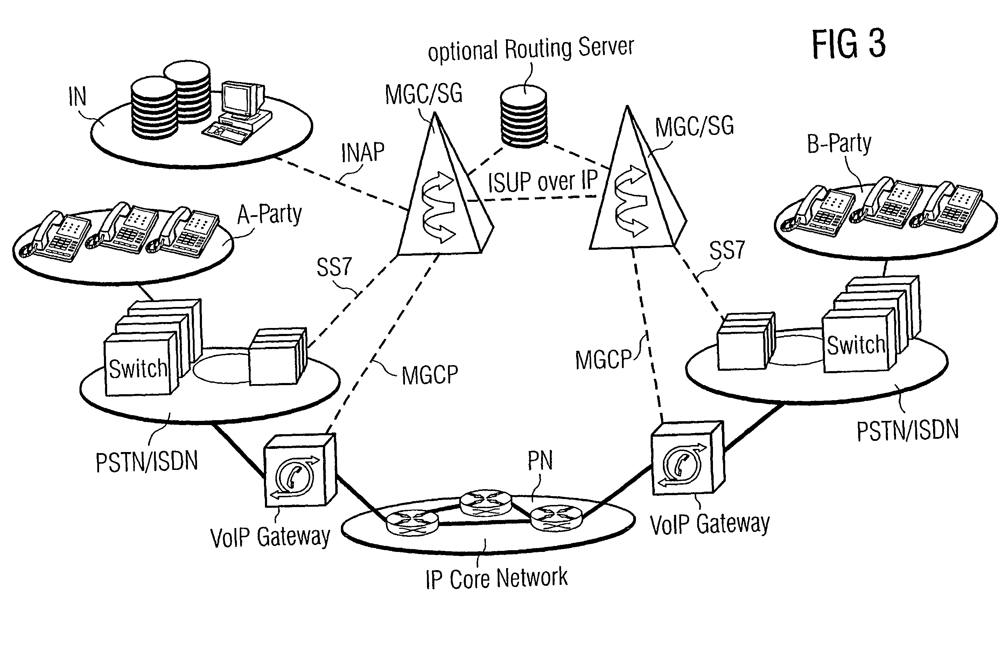

Die klassische periphere Einrichtung terminiert die Verbindungsleitungen, für deren vermittlungstechnische Bearbeitung sie zuständig ist. Üblicherweise finden sich periphere Einrichtungen zur Terminierung von n PCM30- Strecken (z. B. n = 4 für 120 Verbindungsleitungen). Im vorliegenden Anwendungsfall, in dem die Sprache außerhalb der peripheren Einrichtung geführt ist, entfällt die Beschränkung auf die physikalisch bestimmte maximale Anzahl terminierbarer Verbindungsleitungen. Für diesen Einsatzfall kann eine periphere Einrichtung z. B. mehr als 120 Verbindungen gleichzeitig bearbeiten. Die entsprechenden Verhältnisse sind in der europäischen Patentanmeldung EP 99123208.3 beschrieben. Demgemäß kann eine derartige periphere Einrichtung mehrfach virtuell auf einer realen peripheren Einrichtung ablauffähig sein, womit die Funktionalität der Verbindungssteuerung von z. B. n-mal 120 Verbindungen auf einer realen peripheren Einrichtung entsteht. Ein Netz-Szenario, in dem Vermittlungsstellen für außerhalb der Vermittlungsstelle geführte Verbindungen zum Einsatz kommen, ist in Fig. 3 dargestellt.

Die für die Steuerung von außerhalb der Vermittlungsstelle geführten Verbindungen tätige Vermittlungsstelle kann dem A-und/oder B-seitigem Teilnehmer von klassischen TDM-Netzen bekannte Teilnehmer- oder Netz-Leistungsmerkmale zur Verfügung stellen. Hierzu gehören insbesondere Ansagen und Dialoge, die in gewissen Situationen notwendig werden (z.B. 'Kein Anschluß unter dieser Nummer', 'Die Rufnummer hat sich geändert, die neue Rufnummer ist 722-25940' oder Abfrage der Berechtigung zur Einwahl in ein Paktnetz). Im dem klassischen Fall, in dem der Nutzkanal der Vebindung in die Vermittlungsstelle hineingeführt wird, können diese Ansagen und Dialoge von mit entsprechender Funktionalität ausgerüsteten peripheren Einrichtungen bereitgestellt werden.

Werden die Nutzdaten jedoch außerhalb der Vermittlungsstelle in einem Paketnetz geführt, so wird hierzu vorzugsweise ein externes System genutzt. Dieses besitzt Schnittstellen zum Paketnetz für die aus Ansagen und Benutzereingaben bestehenden Nutzdaten. Ferner besitzt das externe Ansage- und Dialog-System (im folgenden 'IVR-System' oder 'Interactive Voice Response System' genannt) eine logische Steuerschnittstelle zu der für die Steuerung von außerhalb der Vermittlungsstelle geführten Verbindungen im Paketnetz tätigen Vermittlungsstelle. Eine solche Vermittlungsstelle ist aus WO 9929095 bekannt.

Die sich hieraus ergebende Problematik besteht darin, wie in einer für die Steuerung von außerhalb der Vermittlungsstelle in einem Paketnetz geführten Verbindungen tätigen Vermittlungsstelle die Steuerung eines externen Systems zur Bereitstellung von Ansagen und Dialogen erreicht werden kann. Hierzu sollten die aus klassischen Vermittlungsstellen bekannten Ansagen- und Dialogfunktionen für über ein Paktenetz geführte Verbindungen für die A- und/oder B-seitigen Teilnehmer verfügbar sein (d.h. Standardansage, Ansagen mit variablen Inhalten, Dialoge mit DTMF-Eingabe oder Spracheingabe des Endteilnehmers). Weiterhin sollte die in der klassischen Vermittlungsstelle verfügbare Verbindungssteuerungslogik (Call Control) zur Ansteuerung der Ansage- und Dialogfunktion verwendet werden können, sowie die mit Ansagen und Teilnehmereingaben befrachteten Nutzdaten im Paketnetz geführt werden, wobei eine temporäre Durchschaltung der mit Ansagen- und Teilnehmereingaben befrachteten Nutzdaten auf die für die Steuerung von außerhalb der Vermittlungsstelle geführten Verbindungen tätige Vermittlungsstelle unterbleibt.

Ebenso sollte eine unnötige Wandlung des mit Ansagen- und Teilnehmereingaben befrachteten Nutzdatenstroms auf TDM-Technik genauso vermieden werden, wie TDM-Anschlußtechnik in den peripheren Einheiten der für außerhalb der Vermittlungsstelle geführten Verbindungen tätigen Vermittlungsstelle. Letztendlich ist die Verfügbarkeit von Leistungsmerkmalen und Diensten einer klassischen Vermittlungsstelle, die Ansage-und Dialogfunktionen benötigen, für die Vermittlungsstelle zur Steuerung von im Paketnetz geführten Verbindungen mit geringem Entwicklungsaufwand sicherzustellen.

Beim Stand der Technik werden zur Lösung dieser Problematik Ansagen und Dialoge durch externe Systeme im Paketnetz bereitgestellt. Hierzu sind die Ansagen und Dialoge entweder am Netzübergang zwischen Paket- und TDM-Netz oder durch eigens für Ansage- und Dialogfunktionen konzipierte paketbasierte IVR-Systeme bereitzustellen. Hierbei erfolgt Steuerung der Ansage und Dialogfunktion durch den die Verbindung steuernden Call Control Server.

Vorteilhaft hieran ist die generelle Verwendbarkeit in Paketnetzen, sowie der Umstand, daß kein überflüssiges TDM-Equipment und keine unbedingte zusätzliche Wandlung der Nutzdaten vorgenommen werden muß.

Problematisch ist jedoch, daß lediglich eine mangelnde Ansteuerbarkeit/ Nutzbarkeit der im Paketnetz vorhandenen IVR-Funktion durch eine für im Paketnetz geführte Verbindungen tätige Vermittlungsstelle gegeben ist.

Der Erfindung liegt die Aufgabe zugrunde, einen Weg aufzuzeigen, wie Ansagen und Dialoge für eine im Paketnetz geführte Verbindungen tätige Vermittlungsstelle bereitgestellt werden können.

Die Erfindung wird ausgehend vom Oberbegriff von Patentanspruch 1 durch die im kennzeichnenden Teil angegebenen Merkmale gelöst.

Vorteilhaft an der Erfindung ist insbesondere, daß periphere Einrichtungen für IVR-Funktionen mit virtuellen Ansage und Dialogports vorgesehen sind. Damit kann eine Anwendung des Prinzips der virtuellen peripheren Einrichtung zur Bereitstellung von Vst-externen IVR-Ports erfolgen, womit der Vorteil eines geringen Entwicklungsaufwands sowie geringer HW - Kosten verbunden ist. Die externen Ansage- und Dialogports sind paketbasiert und werden als Ports an einem Media Gateway modelliert, wobei IVR-spezifische Signalisierung über das für den Zugriff zum Media Gateway verwendete Signalisierungsprotokoll übertragen wird.

Vorteilhafte Weiterbildungen der Erfindung sind in den Unteransprüchen angegeben.

Die Erfindung wird im folgenden anhand eines figürlich dargestellten Ausführungsbeispieles näher erläutert.

Es zeigen:
- Fig 1: die typische Architektur eines Vermittlungssystems mit ungedoppelten peripheren Anschlußeinheiten,
- Fig 2: getrennte Wege von Sprache und Signalisierung zwischen 2 Teilnehmern A, B,
- Fig 3: ein Voice over IP Backbone Scenario,
- Fig 4: Teilzentrales und MG integriertes IVR System,
- Fig 5: die Struktur des virtuellen IVR-Systems ,

In Fig. 1 ist die typische Architektur eines mit ungedoppelten peripheren Einrichtungen ausgebildeten Kommunikationssystems aufgezeigt. Ein derartiges Kommunikationssystem besteht aus peripheren Einrichtungen LTG₁...LTGₙ (Anschlußeinrichtungen für Teilnehmer oder Leitungen), einer zentralen Rechnerplattform CP, einer Nachrichtenverteileinrichtung MB und weiteren, zentralen Einheiten (Koppelfeld SN, Protokollabschlußeinrichtungen CCNC (z. B. #7), Hintergrundspeicher MD, Bedieneinrichtungen BCT).

Die peripheren Einrichtungen LTG₁...LTGₙ erfüllen wesentliche, an die Sprachkanäle der peripheren Einrichtung gebundene vermittlungstechnische Aufgaben. Sie enthalten daher vermittlungstechnische, betriebstechnische und administrative Programme sowie die der Einrichtung zugehörigen Dateninformationen wie Anschlußlage, Signalisierung, Berechtigungen, Rufnummern, individuelle Charakteristika von Verbindungsleitungen und Teilnehmeranschlüssen sowie Ausbauzustand und Konfiguration der peripheren Einrichtung. In einigen der peripheren Einrichtungen LTG_{IP} können als Teil einer integrierten Lösung Einrichtungen IP integriert sein, die Ansage-und Dialogfunktionen bereitstellen.

Die zentrale Rechnerplattform CP dient der koordinierenden Steuerung des Verbindungsauf- und -abbaus sowie der Reaktionen auf administrative und fehlerbedingte Konfigurationsveränderungen. Die peripheren Einrichtungen LTG₁...LTGₙ sind über das Nachrichtenverteilsystem MB untereinander und mit der gemeinsamen Rechnerplattform CP verbunden. Die weiteren zentralen Systemkomponenten stellen dem Vermittlungssystem Spezialfunktionen z. B. für die Durchschaltung der Sprachkanäle, die Bearbeitung der Signalsierungsprotokolle, die Realisierung der Betreiberschnittstelle oder die Speicherung von Massendaten zur Verfügung.

In Fig. 2 ist die Durchschaltung der Sprache zwischen dem A-Teilnehmer (A-Side) und einem beliebigen B-Teilnehmer (B-Side) aufgezeigt. Die Endeinrichtungen TLN können als Teilnehmerendeinrichtungen oder Trunk-Einrichtungen ausgebildet sein. Die von den Endeinrichtungen TLN ausgehenden Signalisierungsnachrichten werden von der betreffenden Endeinrichtung TLN der zugeordneten Vermittlungsstelle VST zugeführt und dort weiterverarbeitet. Die Sprachdurchschaltung erfolgt an der Vermittlungsstelle VST vorbei über ein Paketnetz PN. Da hierzu mehr als eine Richtung zur Verfügung gestellt werden muß, sind in der Regel stets zwei verschiedene periphere Einrichtungen PE am Verbindungsauf- und -abbau beteiligt.

Ein Netz-Szenario, in dem Vermittlungsstellen für außerhalb der Vermittlungsstelle geführte Verbindungen zum Einsatz kommen, ist in Fig. 3 dargestellt. Demgemäß sind die in Fig. 2 aufgezeigten Vermittlungsstellen VST als Media Gateway Server MGC/SG (MG Controller und Signalling Gateway) im Netz angeordnet. Hier wird ferner offenbart, wie die Media Gateway Server MGC/SG im Netz integriert sind. Die zwischen diesen zu übertragenden Informationen werden mit Hilfe genormter Protokolle MGCP, SS7, IP , RTP/RTCP durchgeschaltet.

Erfindungsgemäß werden nun analog zu der Situation einer klassischen TDM-Vermittlungsstelle mit Ansage- und Dialogports in der für im Paketnetz PN geführte Verbindungen tätigen Vermittlungsstelle, im folgenden Vst-basierter MGC/CFS (Media Gateway Controller und / oder Call Feature Server) genannt, Ansageleitungen definiert, die administrativ zu Gruppen gleichartiger Ansage/ Dialogleitungen zusammengefaßt werden können.

Ansagekapazitäten an im Paketnetz befindlichen IVR-Systemen mit direkter paketbasierter Schnittstelle für die die Ansagen und Endbenutzereingaben enthaltenden Nutzdaten werden als virtuelle Ansage- und/oder Dialogports des Vst-basierten MGC/CFS modelliert. Ihre Einrichtung erfolgt in der im Falle einer klassischen TDM-Vermittlungsstelle bekannten Weise, wobei jedoch administrativ eine Kennzeichnung erfolgt. Daraus geht die Virtualität der Ressource hervor, d.h. die Tatsache, daß das Port in einem Gerät außerhalb des Vst-basierten MGC/CFS befindlich ist und von dem Vst-basierten MGC/CFS durch Zugriff auf dieses Gerät gesteuert wird.

Das die Ansage- und Dialogfunktion bereitstellende IVR-System wird im Vst-basierten MGC/CFS wie ein Netzübergang zum TDM-Netz eingerichtet, wobei die Tatsache der Verfügbarkeit von Ansage/Dialogressourcen im einfachsten Falle administrativ eingegeben wird. Damit wird das Ansage- und Dialogfunktion bereitstellende, im Paketnetz befindliche IVR-System in dem Vst-basierten MGC/CFS wie ein Netzübergang dargestellt (im folgenden MG ( Media Gateway) genannt).

Aus Sicht des Vst-basierten MGC/CFS gibt es damit Media Gateways mit Ports zum TDM-Netz, Media Gateways mit Ansagenund/oder Dialogfunktion und Media Gateways, welche sowohl Ports zum TDM-Netz als auch Ports mit Ansagen- und/oder Dialogfunktion besitzen. Insbesondere stellt sich dem Vst-basierten Media Gateway Server MGC/SG ein reines IVR-System mit Ansage/ Dialogfunktion als Media Gateway mit einer bestimmten Anzahl von Ansage/ Dialogports dar.

Zum Verbindungsaufbau einer im Paketnetz auf paketbasierte Ansagen/Dialoge zu führenden Verbindung kommt das von dem Vst-basierten MGC/CFS zur Steuerung eines MGs eingesetzte Signalisierungsprotokoll zum Einsatz. Es wird in gleicher Weise zum Verbindungsabbau einer im Paketnetz auf paketbasierte Ansagen/Dialoge geführten Verbindung genutzt. Die Steuerung der Ansage/Dialogfunktionalität erfolgt durch Einführung von Zusatzparameter in diesem Protokoll, die den Ablauf der Ansage- und Dialogfunktion beschreiben. Derartige IVR-Parameter sind insbesondere die Nummer bzw. der Name von Ansage oder Dialog, die Anzahl der Wiederholungen, die Maßnahmen im Fehlerfall oder bei fehlender Eingabe vom Endbenutzer sowie gegebenenfalls individuelle Parameter, wie eine geänderte Rufnummer. Beispiele für derartige Signalisierungsprotokolle finden sich in der INAP-, MGCP- und H.248-Standardisierung.

Die im Vst-basierten MGC/CFS enthaltenen peripheren Einrichtungen bearbeiten virtuelle Ports, womit zum Ausdruck kommt, daß nur die Signalisierung und damit die Feature-Bearbeitung im Vst-basierten MGC/CFS erfolgt. Der zugehörige Nutzdatenstrom ist außerhalb des Vst-basierten MGC/CFS geführt. Zu den virtuellen Ports der Netzübergänge ins TDM-Netz kommt nun die Klasse der virtuellen Ansage-/Dialogports hinzu. Diese finden sich wieder als Ports einer peripheren Einrichtung zur Bereitstellung von Ansagen- und Diallogfunktionen. Im Gegensatz zu den Vst-integrierten IVR-Systemen im Falle von TDM-Vermittlungsgstellen besitzt diese periphere Einrichtung jedoch keinerlei dedizierte HW-Baugruppen oder FW-Funktionen zur Bearbeitung des die Ansagen und Benutzereingaben enthaltenden Nutzdatenstromes. Insbesondere finden sich keine Funktionen zum Ausbringen von Ansagen auf einen Sprachkanal oder zur DTMF- oder Spracherkennung auf dem Nutzkanal erforderlichen Erkennerfunktionen. Die Bereitstellung von Ansage-und Dialogfunktionen erfolgt daher von einer als periphere Einrichtung zur Bereitstellung von IVR-Funktion agierenden peripheren Einrichtung ohne spezifische HW/FW-Funktionen.

Diese periphere Einrichtung mit virtuellen Ansage-und/oder Dialogports setzt die B-seitigen Belegungen ihrer Ports durch den Vst-basierten MGC/CFS um auf Belegungssignalisierung des dem Port zugeordneten MG mit IVR-Funktion. Die Aufträge zum Spielen von Ansagen und Dialogen werden von dieser peripheren Einrichtung in Richtung MG mit IVR-Funktion ausgebracht. Rückmeldungen des IVR-Systems, die z. B. das Ende der Ansage anzeigen oder den Input des Endnutzers enthalten, erfolgen an die zugeordnete periphere Einrichtung mit virtuellem Ansageund/oder Dialogport. Sämtliche Signalisierung zwischen der das virtuelle Ansage- /und Dialogport betreuenden peripheren Einrichtung und dem zugeordneten externen IVR-System erfolgt über das Signalisierungsprotokoll, das zum Zugriff auf ein MG verwendet wird.

Benötigt ein Leistungsmerkmal oder ein Dienst im Vst-basierten MGC/CFS das Spielen einer Ansage oder eines Dialogs, so erfolgt die Auswahl eines geeigneten B-seitigen virtuellen Ansage- und/oder Dialogports durch den Vst-basierten MGC/CFS. Durch bestehende Funktionalität einer Vermittlungsstelle erfolgt sodann die Belegung des Ports in der dem Port zugeordneten peripheren Einrichtung und die die gewünschte IVR-Funktion beschreibende Auftragssignalisierung an die zugehörige periphere Einrichtung zur vermittlungstechnischen Bearbeitung des Ansage- und/oder Dialogports. Damit wird die Wiederverwendbarkeit der in der klassischen Vermittlungsstelle implementierten Dienste mit IVR-Anteilen ermöglicht, da diese nicht geändert werden müssen, weil sie in der genannten peripheren Einrichtung die ihnen bekannte periphere Einrichtung mit IVR-Funktion vorfinden. Daß die IVR-Funktion letztlich von einem externem System bereitgestellt wird, bleibt diesen Software-Funktionen verborgen.

In der europäischen Patentanmeldung EP 99123208.3 (99P5338DE) ist ein Verfahren und eine Vorrichtung für eine virtuelle periphere Einrichtung offenbart. Erfindungsgemäß kann nun diese virtuelle periphere Einrichtung mit virtuellen Ansagen- und Dialogports versehen werden, so daß eine optimierte Ausnutzung der HW-Basis des Vst-basierten MGC/CFS erreicht wird. Die Anzahl der auf einer peripheren Einrichtung ablauffähigen virtuellen peripheren Einrichtungen mit IVR-Funktion wird aus der Performanz der auf der peripheren Einrichtung eingesetzten Prozessoren bestimmt, der Speichergröße und der Leistungsfähigkeit der Nachrichtenschnittstelle zum Restsystem.

Wird eine Mehrzahl von IVR-Ressourcen in der voranstehenden Weise verteilt im Netz bereitgestellt, so wird durch Heranziehung bestehender Funktionalität des ursprungsabhängigen Routings einer Vermittlungsstelle erreicht, daß Ansagen und Dialoge derart bereitgestellt werden, daß die Netzbelastung minimiert wird. So wird eine über ein Media Gateway hereingeführte Verbindung, die eine IVR-Funktion benötigt, vorzugsweise durch IVR-Ressourcen in diesem GW oder in der Nähe des Media Gateways befriedigt.

Die Zuordnung von peripherer Einrichtung mit virtuellen IVR-Ports bzw. virtueller peripherer Einrichtung zur Steuerung von IVR-Ports und externem IVR-System ist flexibel. Abhängig von den Leistungsdaten kann eine Mehrzahl von virtuellen peripheren Einrichtungen mit IVR-Funktion einem externen IVR-System zugeordnet sein oder umgekehrt eine Mehrzahl von externen IVR-Systemen einer einzigen virtuellen peripheren Einrichtung mit IVR-Funktionalität. Eine virtuelle periphere Einrichtung zur Steuerung von IVR-Ports ist jedoch grundsätzlich in der Lage, IVR-Ressourcen in verschiedenen externen IVR-Systemen zu steuern. Umgekehrt ist eine externes IVR-System in der Lage, parallel Aufträge für eine Mehrzahl von virtuellen peripheren Einrichtungen mit IVR-Ports zu bearbeiten.

Ausfall oder Teilausfall bzw. Wiederverfügbarkeit von externen IVR-Ressourcen führt über die für Ports am Media Gateway definierten sicherungstechnischen Abläufe zu temporärer Nichtverfügbarkeit einzelner virtueller Ansage und/oder Dialogports bzw. zu deren Wiederverfügbarkeit. Totalausfall des IVR-Systems wird durch Netzredundanz toleriert, d.h. die Verfügbarkeit der ausgefallenen Funktion auf virtuellen Ansageund/oder Dialogports an weiteren externen IVR-Systemen.

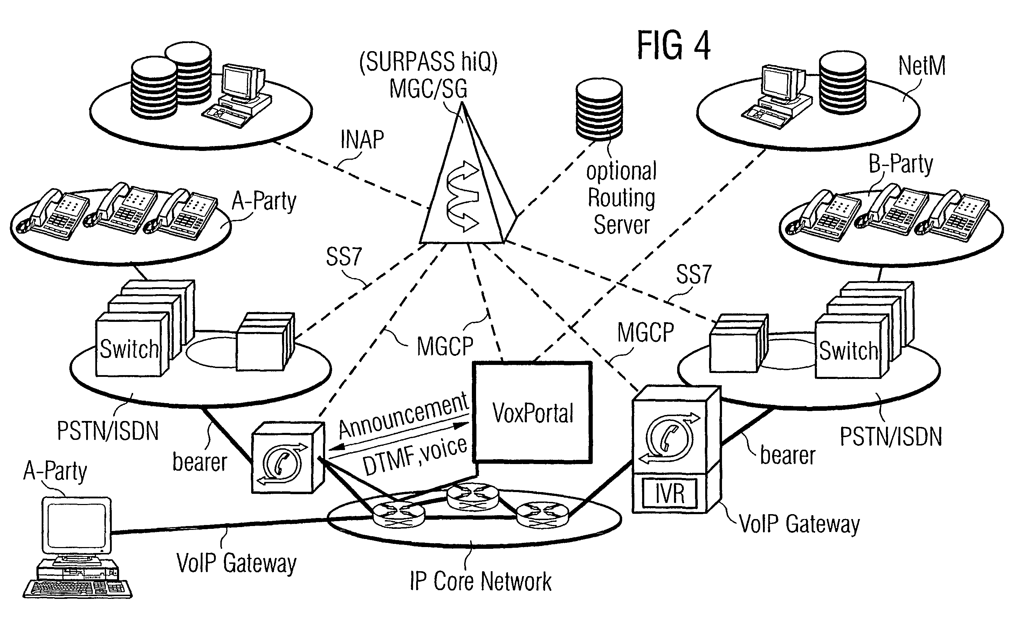

In Fig. 4 ist eine Konfiguration aufgezeigt, auf der das erfindungsgamäße Verfahren zum Ablauf gelangt. Demgemäß sind Vst-basierten MGC/CFS vorgesehen, die untereinander kommunizieren können. Die Kommunikation mit den Media Gateways erfolgt z. B. via MGCP Protokoll. Damit werden sowohl IP-basierte als auch ATM-basierte Paketnetze unterstützt. Zur Teilnehmersignalisierung wird z. B. das H.323 Protokoll verwendet. PCM-basierte Trunks am Media Gateway werden durch virtuelle Ports peripherer Einrichtungen oder virtueller peripherer Einrichtungen LTG bearbeitet.
Außerhalb des Vst-basierten MGC/CFS verfügbare, IP-basierte IVR-Ressourcen werden als virtuelle Ansage- und Dialogports an einem Media Gateway neuen Typs modelliert. Dieser neuartige GW-Typ besitzt 2 Ausprägungen:

Stellt er ausschließlich IVR-Ressourcen zur Verfügung, handelt es sich um ein universell einsetzbares IVR-System, das nur die Aufgabe der Bereitstellung der IVR-Funktion besitzt.

Werden neben IVR-Ressource auch Ports für den Netzübergang TDM<->IP bereitgestellt, handelt es sich um eine MGintegrierte IVR-Ressource, die insbesondere einfache IVR-Funktionen bereitstellt (z. B: Standardansagen in Form von recorded announcements). Beide Einrichtungen werden mittels MGCP Protokoll durch eine für außerhalb der Vst geführte Verbindungen tätige IP-basierte Vermittlungsstelle hiQ gesteuert.

Soll eine Ansage- oder Dialogfunktion in einem der voranstehend beschriebenen GWs benutzt werden, erfolgt eine B-seitige Belegung eines Ansage-/Dialogports. Die Art der IVR-Funktion wird sodann durch weitere MGCP-Signalisierung dem exterenen IVR-System mitgeteilt. Die IP-basierte Vermittlungsstelle hIQ unterscheidet nicht hinsichtlich der Behandlung der beiden MG-Typen für IVR-Funktionen.

Um alle aus dem H.248 Protokoll bekannten und auch für die IP-basierte Vermittlungsstelle hiQ-internen IVR-Leistungsmerkmale benötigten Parameter übertragen zu können, wird eine Erweiterung des MGCP-Protokolls mit Parametern aus dem H.248 Protokoll vorgenommen. Zukünftig kann auch eine reine H.248-Schnittstelle zum Einsatz zwischen der IP-basierte, für außerhalb der Vermittlungsstelle geführte Verbindungen tätige Vermittlungsstelle hiQ und den Media Gateways mit IVR-Funktion kommen.

Im Hinblick auf geringen Änderungsaufwand und optimierte HW-Kosten der IP-basierten, für außerhalb der Vst geführte Verbindungen tätigen Vermittlungsstelle hiQ erfolgt die Steuerung der virtuellen Ansage/Dialogports vorzugsweise auf Basis virtueller periherer Einrichtungen LTG mit Ansage- und Dialogfunktion. Hierdurch bleibt insbesondere die hiQ-interne Schnittstelle zwischen den die IVR-Funktion anfordernden Funktionen in anderen peripheren Einrichtungen oder im Coordinierungsprozessor CP unverändert, was den Entwicklungsaufwand wesentlich verringert.

In dieser Anwendung hat die nunmehr virtuelle periphere Einrichtung zur Steuerung der IVR-Funktion im wesentlichen die Funktion des Weiterreichens von IVR-Auftragsdaten und die Weiterleitung der Rückmeldungen des IVR-Systems. Die im klassischen Anwendungsfall vorhandene Steuerung der IVRspezifischen HW-Module der peripheren Einrichtung mit IVR-Funktion auf vergleichsweise niedrigem logischen Level entfällt.

Das teilzentrale IVR-System (z. B. VoxPortal) verhält sich wie ein Media Gateway hinsichtlich der Steuerung durch die IP-basierte Vermittlungsstelle hiQ. Teilausfälle oder Totalausfälle des teilzentralen IVR-Systems werden abgebildet auf temporäre Nichtverfügbarkeit von virtuellen Ansage- und Dialogports, welche dann seitens der IP-basierten, für außerhalb der Vst geführte Verbindungen tätigen Vermittlungsstelle hiQ nicht mehr belegt werden können. Eine Nichtverfügbarkeit von IVR-Funktionalität im MG-integrierten IVR führt ebenfalls zur temporären Belegungssperre von Ansage- und Dialogports in hiQ mit den Mitteln der MGCP-Signalisierung.

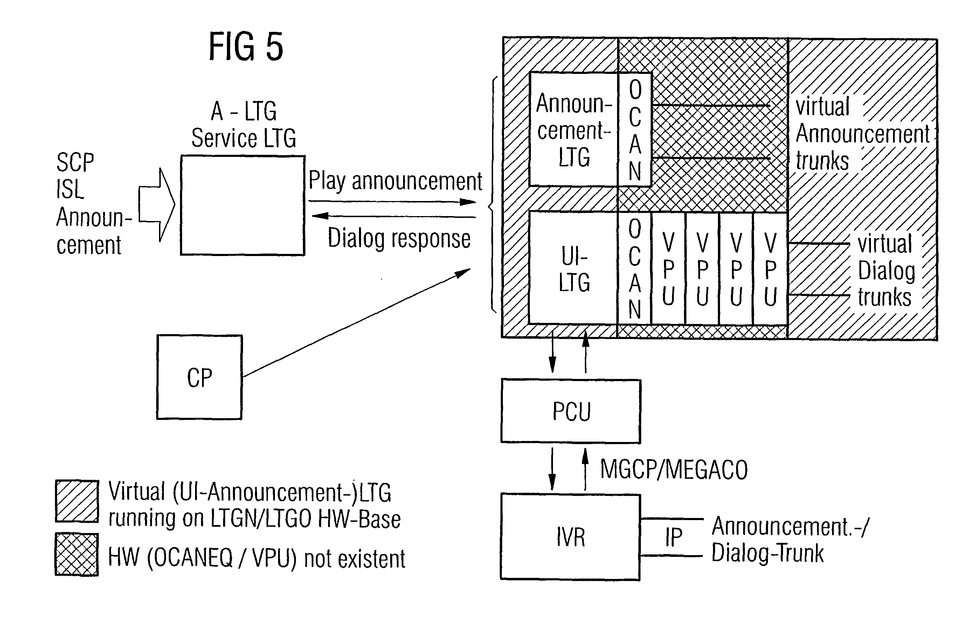

In Fig. 5 ist Struktur der virtuellen Ansage - und Dialogsystems näher aufgezeigt. Als Auftraggeber fungiert die periphere Einrichtung A-LTG, die A-seitig belegt wird, oder einer Service LTG (also eine weder der A- noch der B-Seite zugeordnete weitere periphere Einrichtung) oder der Zentralprozessor CP. Die Ports sind virtuell ausgebildet.

## Patentansprüche

1. Verfahren zur Steuerung von Ansagen und Dialogen für außerhalb einer Vermittlungsstelle über ein Paketnetz (PN) geführte Verbindungen durch periphere Einrichtungen (LTG) eines Vermittlungssytems, die keine HW-orientierten Aufgaben für ihre vermittlungstechnisch zugeordnete Peripherie bereitstellen, wodurch periphere Einrichtungen (LTG) mit virtuellen Ports definiert werden,
**dadurch gekennzeichnet,**
**daß** die Ressourcen für die Ansage- und Dialogfunktion von einer externen Einrichtung bereitgestellt werden,
**daß** die peripheren Einrichtungen mit virtuellen Ansagen- und Dialogports versehen werden,
**daß** zwischen den peripheren Einrichtungen und der externen Einrichtung eine Steuerschnittstelle besteht,
**daß** die externen Ressourcen portspezifisch durch das Vermittlungssystem genutzt werden können.

2. Verfahren nach Anspruch 1,
**dadurch gekennzeichnet,**
**daß** das Betriebsystem und die Sicherungstechnik der peripheren Einrichtung mit virtuellen Ports die quasi-parallele Verarbeitung von n virtuellen peripheren Einrichtungen erlauben, wobei jede virtuelle periphere Einrichtung mittels einer eigenen logischen Adresse über die Nachrichtenschnittstelle der physikalisch zugeordneten peripheren Einrichtung angesprochen werden kann.

3. Verfahren nach Anspruch 1, 2,
**dadurch gekennzeichnet,**
**daß** ein paketbasierter Transport des Nutzdatenstromes für Ansagen und Dialoge in Richtung Paketnetz, bzw. konvertierungsfreie Ausgabe des Nutzdatenstromes am Netzübergang erfolgt.

4. Verfahren nach Anspruch 1 bis 3,
**dadurch gekennzeichnet,**
**daß** die internen Schnittstellen zur peripheren Einrichtung mit Ansage und / oder Dialogfunktion beibehalten werden.

5. Verfahren nach einem der vorstehenden Ansprüche,
**dadurch gekennzeichnet,**
**daß** eine vermittlungssysteminterne Administration als Ansage/Dialogport an einer Netzübergangseinrichtung erfolgt.

6. Verfahren nach einem der vorstehenden Ansprüche,
**dadurch gekennzeichnet,**
**daß** die Steuerprotokolle für Netzübergangseinrichtungen mit ansage/dialogspezifischen Elementen versehen sind.

7. Verfahren nach einem der vorstehenden Ansprüche,
**dadurch gekennzeichnet,**
**daß** ein ursprungsabhängiges Routing zur Auswahl einer Ansageund/oder Dialog-Ressource vorgesehen ist.

8. Verfahren nach einem der vorstehenden Ansprüche,
**dadurch gekennzeichnet,**
**daß** Ausfälle /Wiederverfügbarkeiten von Ansage- und Dialog-Ressourcen auf temporäre Sperre virtueller Ansage- und Dialog-Ports auf peripheren Einrichtungen mit Ansage- und/oder Dialogfunktionen abgebildet werden.

9. Verfahren nach einem der vorstehenden Ansprüche,
**dadurch gekennzeichnet,**
**daß** unterschiedliche IVR-Funktionalität an unterschiedlichen externen Systemen durch Bündelbildung virtueller Ports gleicher Funktion berücksichtigt wird.

10. Verfahren nach einem der vorstehenden Ansprüche,
**dadurch gekennzeichnet,**
**daß** die Ansage- und Dialog- Ressourcen in ungedoppelten und gedoppelten peripheren Einrichtungen einsetzbar sind.

11. Verfahren nach einem der vorstehenden Ansprüche,
**dadurch gekennzeichnet,**
**daß** Standardansagen, individuelle Ansagen und Dialoge mit DTMF-,Sprach- oder Wahlimpulseingabe unterstützt werden.

12. Verfahren nach einem der vorstehenden Ansprüche,
**dadurch gekennzeichnet,**
**daß** das Paketnetz als IP-Netz ausgebildet ist.

13. Verfahren nach einem der Ansprüche 1 bis 11,
**dadurch gekennzeichnet,**
**daß** das Paketnetz als ATM-Netz ausgebildet ist.

## Claims

1. Method for controlling announcements and dialogs for connections carried outside of a exchange via a packet-switched network (PN) by peripheral equipment (LTG) of an switching system, which do not provide any hardware-oriented tasks for their switching-related allocated peripherals, by means of which peripheral equipment (LTG) with virtual ports are defined,
**characterized by** the fact
that the resources for the announcement and dialog functionality of an external equipment are provided,
that the peripheral equipment are provided with virtual announcement and dialog ports,
that a control interface exists between the peripheral equipment and the external equipment,
that the external resources can be used on a port-specific basis by the switching system.

2. Method in accordance with Claim 1,
**characterized by** the fact
that the operating system and the safeguarding technology of the peripheral equipment with virtual ports allow the quasi-parallel processing of n virtual peripheral equipment, where each virtual peripheral equipment can be addressed via the message interface of the physically allocated peripheral equipment by means of its own virtual address.

3. Method in accordance with Claims 1 and 2,
**characterized by** the fact
that packet-based transport of the payload data stream for announcements and dialogs takes place in the direction of the packet-switched network and/or conversion-free output of the payload data stream at the network interworking point.

4. Method in accordance with Claims 1 to 3,
**characterized by** the fact
that the internal interfaces to the peripheral equipment with announcement and/or dialog functionality are retained.

5. Method in accordance with one of the previous claims,
**characterized by** the fact
that an administration function is effected within the switching system as an announcement / dialog port on a network interworking equipment.

6. Method in accordance with one of the previous claims,
**characterized by** the fact
that the control protocols for network interworking equipment are provided with announcement/dialog-specific elements.

7. Method in accordance with one of the previous claims,
**characterized by** the fact
that origin-dependent routing is envisioned for the purposes of selecting an announcement and/or dialog resource.

8. Method in accordance with one of the previous claims,
**characterized by** the fact
that failure / re-availability events of announcements and dialog resources are mapped to temporary blocking of virtual announcement and dialog ports on peripheral equipment with announcement and/or dialog functions.

9. Method in accordance with one of the previous claims,
**characterized by** the fact
that different IVR functionality on different external systems is taken into account by means of bundling of virtual ports with the same function.

10. Method in accordance with one of the previous claims,
**characterized by** the fact
that the announcement and dialog resources can be employed in unduplicated and duplicated peripheral equipment.

11. Method in accordance with one of the previous claims,
**characterized by** the fact
that standard announcements, individual announcements and dialogs with DTMF, voice or dial pulse input are supported.

12. Method in accordance with one of the previous claims,
**characterized by** the fact
that the packet-switched network is structured as an IP network.

13. Method in accordance with one of Claims 1 to 11,
**characterized by** the fact
that the packet-switched network is structured as an ATM network.

## Revendications

1. Procédé de pilotage d'annonces et de dialogues pour des communications menées à l'extérieur d'un central téléphonique par l'intermédiaire d'un réseau de paquets (PN) par des installations périphériques (LTG) d'un système de commutation, qui ne mettent à disposition aucune tâche orientée HW pour leur périphérie associée par technique de commutation, par l'intermédiaire duquel des installations périphériques (LTG) avec des ports virtuels sont définies,
**caractérisé en ce que**
les ressources pour la fonction d'annonces et de dialogue sont mises à disposition par une installation externe,
**en ce que** les installations périphériques sont munies de ports virtuels d'annonces et de dialogue,
**en ce qu'**une interface de pilotage existe entre les installations périphériques et les installations externes,
**en ce que** les ressources externes peuvent être utilisées par le système de commutation de façon spécifique aux ports.

2. Procédé selon la revendication 1, **caractérisé en ce que** le système d'exploitation et la technique de sécurité de l'installation périphérique à ports virtuels permettent le traitement quasi-parallèle de n installations périphériques virtuelles, chaque installation périphérique virtuelle pouvant être interrogée au moyen d'une propre adresse logique, par l'intermédiaire de l'interface d'informations de l'installation périphérique physiquement associée.

3. Procédé selon l'une quelconque des revendications 1, 2, **caractérisé en ce qu'**un transport basé par paquets du flux de données utiles pour les annonces et le dialogue en direction du réseau de paquets ou une édition libre de conversion du flux de données utiles a lieu à la passerelle interréseau.

4. Procédé selon l'une quelconque des revendications 1 à 3, **caractérisé en ce que** les interfaces internes vers l'installation périphérique avec fonction d'annonces et/ou de dialogue sont maintenues.

5. Procédé selon l'une quelconque des revendications précédentes, **caractérisé en ce qu'**une administration interne au système de commutation a lieu sous forme de port d'annonces / de dialogue sur un système de passerelle interréseau.

6. Procédé selon l'une quelconque des revendications précédentes, **caractérisé en ce que** les protocoles de pilotage pour les systèmes de passerelle interréseau sont munis d'éléments spécifiques aux annonces / au dialogue.

7. Procédé selon l'une quelconque des revendications précédentes, **caractérisé en ce qu'**un routage dépendant des origines est prévu pour la sélection d'une ressource d'annonces et/ou de dialogue.

8. Procédé selon l'une quelconque des revendications précédentes, **caractérisé en ce que** des pannes / des remises à disposition de ressources d'annonces / de dialogue sont imagées sur des blocages temporaires de ports virtuels d'annonces et de dialogue sur des installations périphériques avec des fonctions d'annonces et/ ou de dialogue.

9. Procédé selon l'une quelconque des revendications précédentes, **caractérisé en ce que** différentes fonctionnalités IVR sont prises en considération sur différents systèmes externes, par formation de faisceaux de ports virtuels de fonction identique.

10. Procédé selon l'une quelconque des revendications précédentes, **caractérisé en ce que** les ressources d'annonces et de dialogue sont utilisables dans des installations périphériques non doublées et doublées.

11. Procédé selon l'une quelconque des revendications précédentes, **caractérisé en ce que** des annonces standard, des annonces individuelles et des dialogues avec des enregistrements d'impulsions DTMF, vocales ou de sélection sont assistés.

12. Procédé selon l'une quelconque des revendications précédentes, **caractérisé en ce que** le réseau de paquets est conçu sous forme de réseau IP.

13. Procédé selon l'une quelconque des revendications 1 à 11, **caractérisé en ce que** le réseau de paquets est conçu sous forme de réseau ATM.
